# EUROPEAN PATENT SPECIFICATION

(11) **EP 3 469 223 B1**
(45) Date of publication and mention of the grant of the patent: **11.08.2021**
(21) Application number: 17732539.6
(22) Date of filing: 06.06.2017
(51) Int. Cl.: F16C 32/04, F16F 15/30, F16F 15/315, H02K 7/02, H02K 7/09

(54) **ROTATING MASS ENERGY STORE**
DREHMASSEENERGIESPEICHER
ACCUMULATEUR D'ÉNERGIE À MASSE TOURNANTE

(30) Priority: 11.06.2016 GB 201610204
(43) Date of publication of application: 17.04.2019
(73) Proprietor: Carson, Abigail, Huntingdon, Cambridgeshire PE28 4SG (GB)
(72) Inventor: Carson, Abigail, Huntingdon, Cambridgeshire PE28 4SG (GB)
(74) Representative: Abraham, Richard
(86) International application number: PCT/GB2017/051631
(87) International publication number: WO 2017/212244

(56) References cited:
- EP-A1- 2 492 528
- EP-A2- 2 648 319
- WO-A1-01/84693
- WO-A1-2017/036799
- CN-A- 101 409 478
- CN-U- 203 836 075
- DE-A1-102011 116 690

## Description

This invention relates to a rotating mass energy store.

Energy is required to be stored so that it can be used at a later time than when it was once generated. Energy can be stored in different ways. An energy store that uses chemicals to store potential energy is harmful to the environment when it is disposed or recycled.

To overcome this problem, this present invention proposes kinetic energy storage without using chemicals or dangerous materials. This invention stores energy kinetically by means of a rotating mass, also known as a rotor.

This invention eliminates some components that are in existing rotary energy store designs, which reduces material usage and increases energy and power density. Natural properties of materials are utilised to form a more effective and efficient energy store that does not harm the environment.

EP 2492528 discloses a rotary energy store in accordance with the pre-characterising portion of claim 1.

In accordance with the present invention there is provided a rotary energy store as defined in claim 1. In one embodiment, the axial permanent magnetic bearings use Halbach array magnet arrangements to produce levitation forces.

In one embodiment, the rotor is in a sealed housing. The sealed housing may have a connected vacuum pump to form a vacuum environment for the rotor to rotate in.

In one embodiment, the housing secures one or more of (e.g. two or more of or all of): the stator of the motor-generator unit; the magnets of the radial electrodynamic bearings; and the axial permanent magnetic bearings.

In one embodiment, the stator is located equidistant between first and second axial permanent magnetic bearings.

In one embodiment, the rotor body is a hollow body (e.g. hollow symmetrical body).

In one embodiment, the hollow body contains embedded magnets in its wall that form part of the motor-generator unit.

In one embodiment, the rotor body contains embedded conductors that form part of a complete radial electrodynamic bearings.

In one embodiment, the embedded magnets within the rotor rotate about the stator and are also equidistant between first and second axial permanent magnetic bearings.

In one embodiment, the embedded conductors for the radial electrodynamic bearings are located such that the embedded conductors are aligned with the radial bearing magnets (e.g. so the embedded conductors within the rotor rotates about the radial bearing magnets secured by the housing).

In one embodiment, the embedded conductors for the axial permanent magnetic bearings are located such that the embedded conductor are embedded in the rotor at an open end of the rotor, so the sequence of arrangement is, rotor with embedded conductor, a gap, the axial permanent magnet arrangement which is secured in place by the housing. This sequence may change direction but remains in the same order as the arrangement will be at both ends of the rotor.

In one embodiment, the rotary energy store of the present invention has a rotor that is magnetically levitated axially and radially.

The rotor may have a hollow structure that is symmetric axially and radially, it has the majority of its mass at its circumference and contains magnets and conductors within its wall. In one embodiment, these magnets in the rotor wall are part of an integrated motor-generator unit where the rotor is forced to rotate about an electrical stator owing to induction. The magnets within the wall of the rotor may have a polarisation sequence that forms a Halbach array producing an augmented magnetic field in the inner cavity of the rotor where the stator is located. An integrated motor-generator unit means that the motor-generator is not a separate part from the rotor, the rotor is used to be part of the motor-generator unit.

In one embodiment, the rotor is made of a composite material.

In one embodiment, the electrical stator is static. The stator may have multiple poles, which are extended parts of the geometry and are equally spaced radially. Each pole may hold a coil winding. A coil winding is where electrically conductive wire is wrapped around the bulk of the pole multiple times. Each coil winding has 'tails' that are where the coil begins and where the coil ends. When electrical current is conducted by the conductive wire of the coil windings, by induction, the rotor is forced to rotate about the stator. Depending on the direction of the current, the rotor will be forced to rotate faster relative to prior motion or rotate slower relative to prior motion. When electrical current is drawn from the coil winding wire, leaving the energy store, the rotor will slow down. When electrical current is applied to the wire, going into the energy store, the rotor will rotate faster.

In one embodiment, the stator is made of iron. In one embodiment, the electrically conductive wire is made of copper.

In one embodiment, a housing structure encloses all moving parts of the energy store. The housing may possess a fitting that is able to connect a vacuum pump and or vacuum system and or vacuum seal so that a vacuum or low pressure environment can be created within the housing cavity.

The housing may secure the location of the magnets and iron pole shoes of the radial electrodynamic bearings and the magnets of the axial permanent magnetic bearings, this may be by means of brackets or similar fixing preferably made from a non-conducting material.

In one embodiment, the coil winding tails extend to the housing and through a seal so that electrical current can be exchanged to and from the energy store, but without air leakage.

In one embodiment, the axial and radial levitation magnetic bearings are both permanent magnetic bearings.

In one embodiment, the radial magnetic bearings prevent gyration about the axis of rotation and contact between stationary and moving parts of the energy store. In one embodiment, the radial magnetic bearings are electrodynamic bearings, comprising a hollow cylindrical stack of alternating iron rings and ring magnets, the stack sequence begins and ends with iron rings, these may be known as iron pole shoes. The iron pole shoes and ring magnets may have the geometry of a shallow hollow cylinder.

In one embodiment, a conductor is embedded in the wall of the rotor aligned with the location of the electrodynamic bearings, which gives rise to repulsive forces between the conductor itself and the electrodynamic bearing, levitating and stabilising the rotor. As the electrodynamic bearings are located near the ends of the rotor, the conductor for the electrodynamic bearing will be located in the wall of the rotor so that it aligns with the electrodynamic bearings. Each electrodynamic bearing may have at least one conductor that is embedded in the wall of the rotor.

In one embodiment, axial magnetic bearings prevent touchdown of the rotor. Touchdown is where levitation is lost and the rotor falls (possibly whilst rotating) and hits a static part of the energy store. In one embodiment, the axial magnetic bearings are arrangements of permanently polarised magnet segments that form a ring shape. The sequence of polarised magnets may be in the form of a Halbach array where the augmented field is where the rotor is located, wherein a conductor is embedded in the rotor wall. Repulsive forces arise between the conductor embedded in the rotor wall and the arrangement of polarised magnets. As the axial magnetic bearings are located at the extremities of the rotor length, the conductor in the rotor wall will be located close to the rotor end(s). The conductor is in the form of a torus conductor coil, the conductor can be made from more than one piece.

A Halbach array is a sequence of magnets with a particular polarisation pattern. The sequence is of magnets that are alternatively polarised laterally and longitudinally. However, the longitudinally polarised magnets alternatively change polarity. The laterally polarised magnets also alternatively change polarity. So the base sequence is four magnets long, and this sequence repeats. This sequence can be formed into a geometrical shape but the relative sequence/pattern remains.

An embodiment of the present invention will now be described solely by way of example and reference to the accompanying drawings in which:

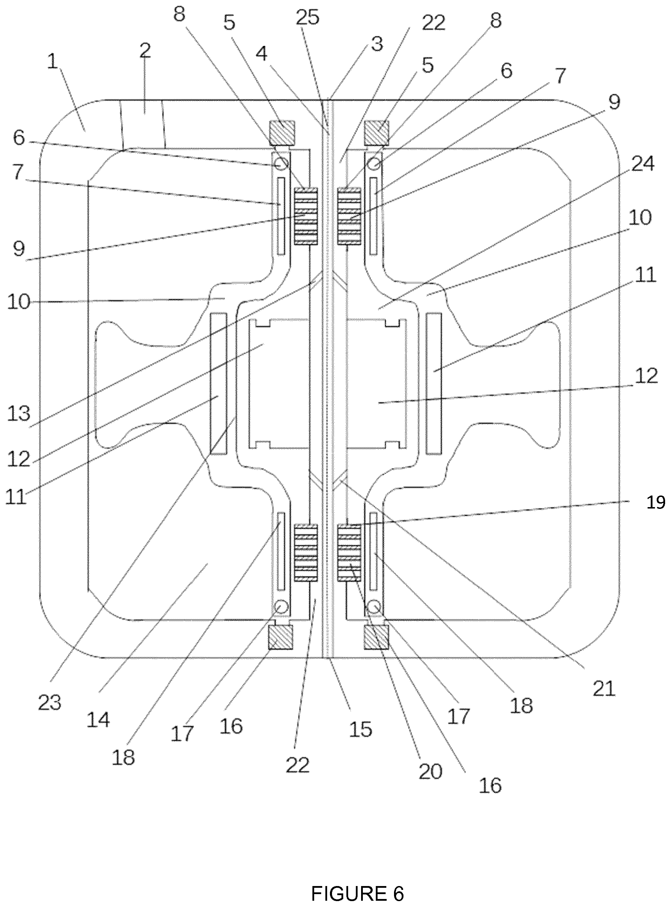

Figure 6 shows a rotary energy store in accordance with an embodiment of the present invention; and

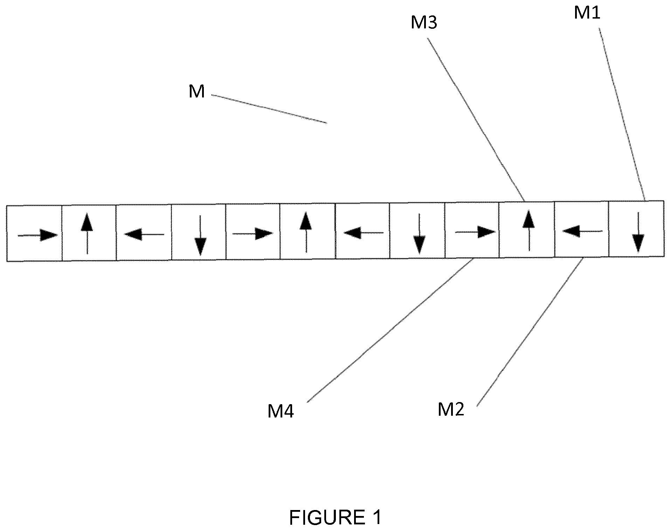

Figures 1, 2, 3A-C, 4A-B and 5A-C show component parts of the rotary energy store of Figure 6.
Figure 1 shows a Halbach array sequence where M is the augmented magnetic field, M2 and M4 are the longitudinally polarised magnets, alternating in direction, M3 and M1 are the laterally polarised magnets, alternating in direction. The magnets are equal in size.

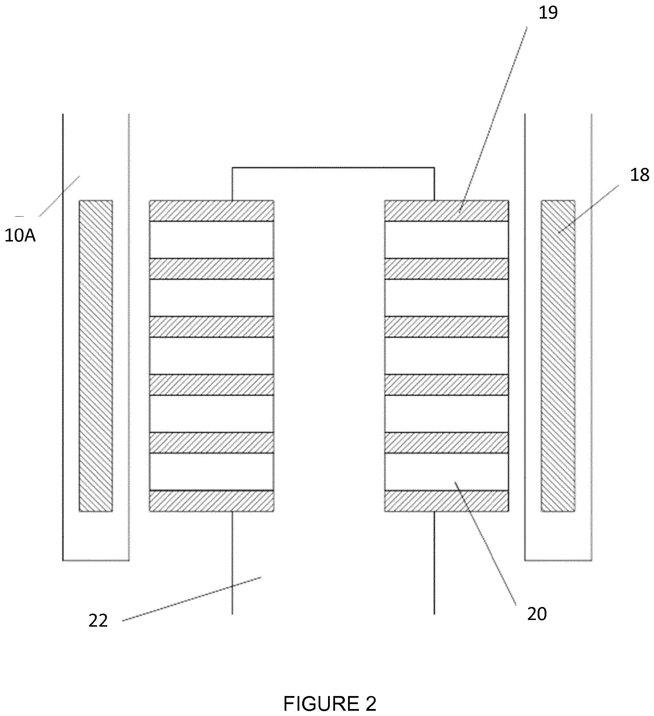

Figure 2 shows the cross section of the electrodynamic bearing that provides radial stability and levitation. The interacting conductor and securing shaft/bracket is also shown, as if it was cut in half down its centre. The electrodynamic bearing comprises iron pole shoes 19 that are ring shape, ring magnets 20, a securing shaft 22 that is attached to or part of the housing, a conductor 18 embedded in the rotor wall 10A of the rotor.

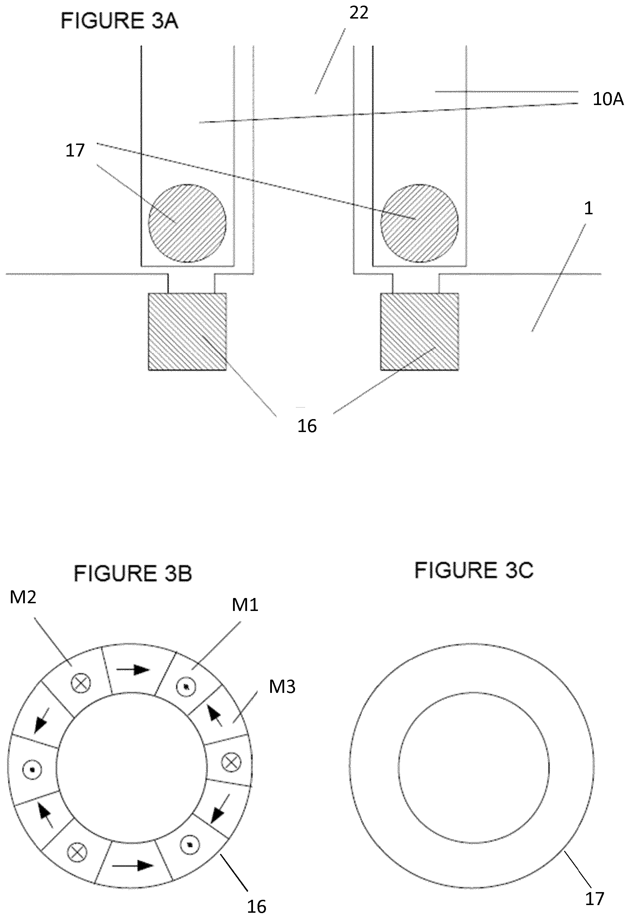

Figures 3A-3B show the axial permanent magnetic bearing with its interacting conductor and securing method, shown as if it was cut in half through its centre. In Figure 3A a cross section of the axial permanent magnetic bearing and the securing method is shown, where 16 is the cross section for the magnet ring which comprises small ring magnet segments, 1 part of the housing which partially encloses the axial permanent magnetic bearing which comprises magnet segments, 22 the shaft attached to or part of the housing which leads to securing other components, 17 is the torus conductor, which is coil shaped and 10A the rotor wall. The housing section 1 is of geometry that partially encloses the axial permanent magnetic bearing 16, 22 is a section which can be part of the same body of 1 which can lead to securing the electrodynamic bearing and stator. The torus conductor 17 is embedded in the rotor wall 10A. The rotor 10 including the embedded torus conductor 17 levitate about the axial permanent magnetic bearing 16 which is secured in place by housing section 1.
Figure 3B shows the top view of the axial permanent magnetic bearing 16 of Figure 3A. The segments that form the 'ring' are shown with their polarisation directions. Every alternative magnet is polarised tangentially, and each other magnet is polarised either into or out of the paper, labelled as M2 and M1 respectively. The tangentially polarised magnets M3 alternate in the tangential direction. The magnets with polarisation direction into the paper are labelled M2. The magnets with polarisation direction out of the paper are labelled M1.
Figure 3C shows the top view of the torus conductor 17.

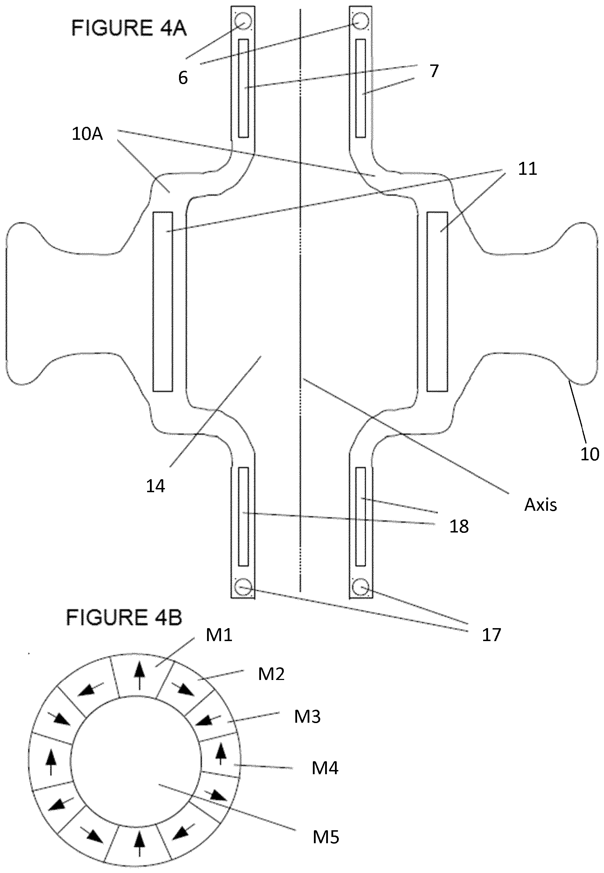

Figure 4A represents rotor 10 with its embedded magnets and conductors. Torus conductors 6, 17 and radial conductors 7, 18 are embedded in the rotor wall 10A, rotor magnets 11 are embedded in the wall 10A of the rotor near the inner surface of the rotor cavity 14 where the electrical stator would be located.
Figure 4B shows the top view of the rotor magnets and their polarisation direction. The polarisation pattern comprises tangentially polarised magnets and radially polarised magnets. The pattern alternates between tangentially and radially polarised magnets, and these alternate too. M1 and M2 are both radially polarised, but are in opposing directions, where M1 is polarised towards the circumference of the ring, and M2 is polarised towards the centre of the ring. M3 and M4 are both tangentially polarised magnets, but are polarised in opposite directions. The base sequence comprises of Ml, M2, M3 and M4 which repeats to form the pattern. The polarisation pattern of magnets creates an augmented magnetic field on the inside of the ring, labelled M5.

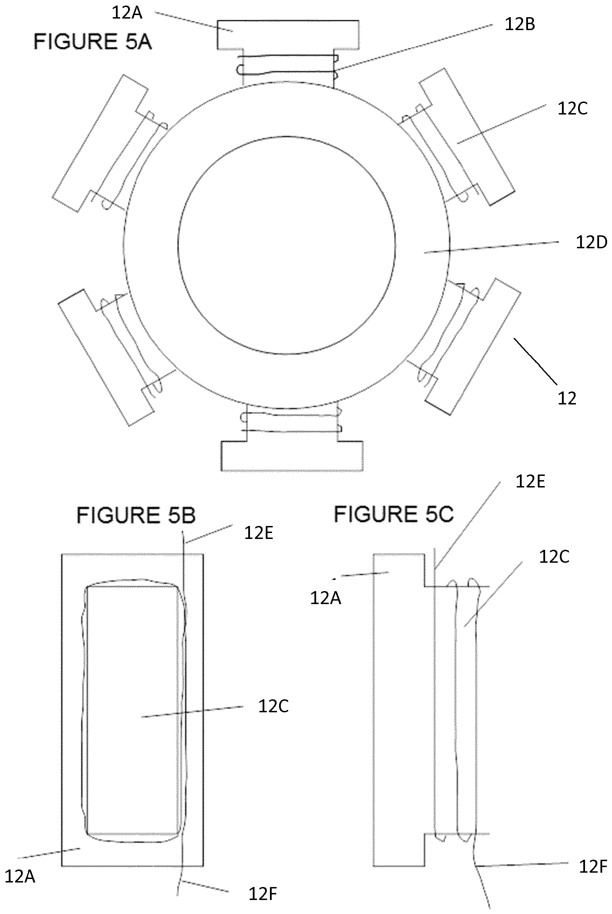

Figure 5A shows the top view of the electrical stator 12 comprising pole head 12A, electrically conductive wire 12B, pole piece 12C, and stator core 12D. The stator12 has more than one pole, usually five or six. The poles are equally spaced around the stator core 12D. Each pole piece 12C has a pole head 12A, the conductive wire 12B is wrapped around the pole piece 12C for at least one complete turn, but can have multiple turns.
Figure 5B shows how the conductive wire 12B of Figure 5A is wrapped around the pole piece 12C of Figure 5A. In Figure 5B, 12A is the pole head, 12C is the pole piece, and 12E and 12F show the coil 'tails'. The coil tails 12E and 12F are extensions of the conductive wire 12B that extend from where the coil starts and where the coil ends, in other words, where the coil leads to the coil and leaves the pole piece 12C.
Figure 5C shows the pole piece 12C of Figure 5A and how the conductive wire 12B of Figure 5A wraps around it. In Figure 5C, 12A is the pole head, 12C is the pole piece and 12E and 12F are the coil 'tails'. The conductive wire 12B wraps around the pole piece 12C for two whole turns and leaves the pole piece 12C with the coil tail extension 12F.
Figure 6 shows the rotary energy store with the majority of its components.

Housing 1 can have a fitting or connection 2 that can connect with a vacuum pump and or seal that is able to create a vacuum environment within the cavity of the housing 14.

The housing 1 also has at least one seal that holds a wire through the housing and does not allow air leakage to occur to or from the energy store. The drawing shows the housing with two wire seals 3 and 15.

The housing 1 has a cavity 14 where most of the components go, and where the vacuum environment is created.

The housing 1 has a shaft 22 that is through its centre, with a channel 4, and at either end of the shaft are two wire seals 3 and 15.

The shaft 22 has additional small channels 13 and 21 that allow the coil tails of 12E and 12F of Figure 5B to go from the poles of the stator 12 through to the centre channel 4 of the shaft 22 and to the wire seals 3 and 15, that then leave the energy store for energy exchange.

The shaft 22 secures the stator 12 in place.

The stator 12 is located on the shaft 22 in the housing 1 so that it is equidistant from either axial magnetic bearing.

The housing 1 secures the location of the axial magnet bearing rings 5 and 16 by means of geometry of the housing.

The rotor 10 is levitated within the housing cavity 14 about the shaft 22, between the axial magnets 5 and 16 and about the electrodynamic bearings, which comprises multiple iron pole shoes 8 and 19 and multiple ring magnets 9 and 20, which are stacked alternatively, and explained in Figure 2. The electrodynamic bearings are secured in place on the shaft 22.

The rotor 10 has components embedded in its wall. The rotor 10 has 'open' ends so that it can rotate about the electrodynamic bearing that is secured by a shaft. Two torus conductors 6 and 17 are embedded in the rotor wall at the extremities of the rotor 10. Two conductors 7 and 18 are embedded in the rotor wall for each radial electrodynamic bearing, and are embedded so that they are aligned with the electrodynamic bearing. The rotor 10 also has magnets 11 embedded in its main bulk near the inner surface 23 of the rotor cavity 24. The rotor magnets 11 are located such that they are aligned with the stator 12 for interaction to occur.

## Claims

1. A rotary energy store comprising:
a motor-generator unit including a stator (12) and a permanently magnetically levitated rotor (10) comprising a rotor body;
**characterised in that**:
the rotor body contains at least one embedded conductor (6, 17) forming part of a complete axial permanent magnetic bearing of a permanent magnetic levitation system; and
the at least one embedded conductor (6, 17) is a torus conductor coil.

2. A rotary energy store according to claim 1 where the rotor body further contains at least one embedded conductor (7, 18) forming part of a complete radial permanent magnetic bearing of the permanent magnetic levitation system.

3. A rotary energy store according to claim 1 where the rotor body is a hollow body.

4. A rotary energy store according to claim 1 where the permanent magnetic levitation system comprises of radial permanent magnetic bearings and axial permanent magnetic bearings.

5. A rotary energy store according to claim 4 where the radial permanent magnetic bearings are electrodynamic bearings and the axial permanent magnetic bearings use Halbach array magnet arrangements (16) to produce levitation forces.

6. A rotary energy store according to claim 1 and/or claim 4 where the motor-generator unit comprises a housing (1) securing one or more of: the stator (12) of the motor-generator unit; magnets (9) of the radial electrodynamic bearings; and magnets (16) of the axial permanent magnetic bearings.

7. A rotary energy store according to claim 6 where the rotor (10) is in a sealed housing (1), that can have a connected vacuum pump to form a vacuum environment for the rotor (10) to rotate in.

8. A rotary energy store according to claim 1 where the stator (12) is located equidistant between a first and a second axial permanent magnetic bearings.

9. A rotary energy store according to claim 1 where the rotor body further contains embedded magnets (11) in a wall of the rotor body that form part of the motor-generator unit.

10. A rotary energy store according to claim 9 where the embedded magnets (11) within the wall of the rotor have a polarisation sequence that forms a Halbach array producing an augmented magnetic field.

11. A rotary energy store according to claim 10 where the Halbach array produces the augmented magnetic field in an inner cavity (24) of the rotor (10) where the stator (12) is located.

12. A rotary energy store according to claims 8 and 9 where the embedded magnets (11) within the rotor (10) rotate about the stator (12) and are also equidistant between first and second axial permanent magnetic bearings.

13. A rotary energy store according to claims 2 and 6 where the embedded conductors (7) for the radial electrodynamic bearings are located such that the embedded conductors (7) are aligned with the radial bearing magnets (9), so the embedded conductors (7) within the rotor (10) rotates about the radial bearing magnets (9) secured by the housing (1).

14. A rotary energy store according to claim 6 where the embedded conductors (6) for the axial permanent magnetic bearings are located such that the embedded conductors (6) are embedded in the rotor (10) at an open end of the rotor (10), so the sequence of arrangement is, rotor (10) with embedded conductor (6), a gap, the axial permanent magnet arrangement (16) which is secured in place by the housing (1).

## Patentansprüche

1. Rotationsenergiespeicher, umfassend:
eine Motor-Generator-Einheit mit einem Stator (12) und einem permanent magnetisch schwebenden Rotor (10), der einen Rotorkörper umfasst;
**dadurch gekennzeichnet, dass**:
der Rotorkörper mindestens einen eingebetteten Leiter (6, 17) enthält, der Teil eines vollständigen axialen permanentmagnetischen Lagers eines permanentmagnetischen Schwebesystems ist; und
der mindestens eine eingebettete Leiter (6, 17) eine Toroidleiterwicklung ist.

2. Rotationsenergiespeicher nach Anspruch 1, wobei der Rotorkörper mindestens einen eingebetteten Leiter (7, 18) enthält, der Teil eines vollständigen radialen permanentmagnetischen Lagers des permanentmagnetischen Schwebesystems ist.

3. Rotationsenergiespeicher nach Anspruch 1, wobei der Rotorkörper ein Hohlkörper ist.

4. Rotationsenergiespeicher nach Anspruch 1, wobei das permanentmagnetische Schwebesystem aus radialen permanentmagnetischen Lagern und axialen permanentmagnetischen Lagern besteht.

5. Rotationsenergiespeicher nach Anspruch 4, wobei die radialen permanentmagnetischen Lager elektrodynamische Lager sind und die axialen permanentmagnetischen Lager Halbach-Array-Magnetanordnungen (16) verwenden, um Schwebekräfte zu erzeugen.

6. Rotationsenergiespeicher nach Anspruch 1 und/oder Anspruch 4, wobei die Motor-Generator-Einheit umfasst:
ein Gehäuse (1), das eines oder mehrere befestigt von: dem Stator (12) der Motor-Generator-Einheit; Magneten (9) der radialen elektrodynamischen Lager; und Magneten (16) der axialen permanentmagnetischen Lager.

7. Rotationsenergiespeicher nach Anspruch 6, wobei sich der Rotor (10) in einem abgedichteten Gehäuse (1) befindet, das eine angeschlossene Vakuumpumpe aufweisen kann, um eine Vakuumumgebung zur Rotation des Rotors (10) zu bilden.

8. Rotationsenergiespeicher nach Anspruch 1, wobei der Stator (12) äquidistant zwischen einem ersten und einem zweiten axialen permanentmagnetischen Lager angeordnet ist.

9. Rotationsenergiespeicher nach Anspruch 1, wobei der Rotorkörper ferner eingebettete Magnete (11) in einer Wand des Rotorkörpers enthält, die einen Teil der Motor-Generator-Einheit bilden.

10. Rotationsenergiespeicher nach Anspruch 9, wobei die eingebetteten Magnete (11) innerhalb der Wand des Rotors eine Polarisationssequenz aufweisen, die eine Halbach-Anordnung bildet, die ein verstärktes Magnetfeld erzeugt.

11. Rotationsenergiespeicher nach Anspruch 10, wobei das Halbach-Array das verstärkte Magnetfeld in einem inneren Hohlraum (24) des Rotors (10) erzeugt, wo sich der Stator (12) befindet.

12. Rotationsenergiespeicher nach Anspruch 8 und 9, wobei die eingebetteten Magnete (11) innerhalb des Rotors (10) um den Stator (12) rotieren und auch zwischen ersten und zweiten axialen permanentmagnetischen Lagern äquidistant sind.

13. Rotationsenergiespeicher nach Anspruch 2 und 6, wobei die eingebetteten Leiter (7) für die radialen elektrodynamischen Lager so angeordnet sind, dass die eingebetteten Leiter (7) an den Radiallagermagneten (9) ausgerichtet sind, so dass die eingebetteten Leiter (7) innerhalb des Rotors (10) um die vom Gehäuse (1) befestigten Radiallagermagnete (9) rotieren.

14. Rotationsenergiespeicher nach Anspruch 6, bei dem die eingebetteten Leiter (6) für die axialen permanentmagnetischen Lager so angeordnet sind, dass die eingebetteten Leiter (6) an einem offenen Ende des Rotors (10) in dem Rotor (10) eingebettet sind, so dass die Anordnungsreihenfolge ist: Rotor (10) mit eingebettetem Leiter (6), ein Spalt, die axiale Permanentmagnetanordnung (16), die durch das Gehäuse (1) befestigt ist.

## Revendications

1. Accumulateur d'énergie rotatif comprenant :
une unité moteur-générateur comprenant un stator (12) et un rotor à lévitation magnétique permanente (10) comprenant un corps de rotor ;
**caractérisé en ce que** :
le corps de rotor contient au moins un conducteur incorporé (6, 17) faisant partie d'un palier magnétique permanent axial complet d'un système de lévitation magnétique permanente ; et
l'au moins un conducteur incorporé (6, 17) est une bobine de conducteur torique.

2. Accumulateur d'énergie rotatif selon la revendication 1, où le corps de rotor contient en outre au moins un conducteur incorporé (7, 18) faisant partie d'un palier magnétique permanent radial complet du système de lévitation magnétique permanente.

3. Accumulateur d'énergie rotatif selon la revendication 1, où le corps de rotor est un corps creux.

4. Accumulateur d'énergie rotatif selon la revendication 1, où le système de lévitation magnétique permanente comprend des paliers magnétiques permanents radiaux et des paliers magnétiques permanents axiaux.

5. Accumulateur d'énergie rotatif selon la revendication 4, où les paliers magnétiques permanents radiaux sont des paliers électrodynamiques et les paliers magnétiques permanents axiaux utilisent des agencements d'aimants en réseau de Halbach (16) pour produire des forces de lévitation.

6. Accumulateur d'énergie rotatif selon la revendication 1 et/ou la revendication 4, où l'unité moteur-générateur comprend
un boîtier (1) fixant un ou plusieurs parmi : le stator (12) de l'unité moteur-générateur ; des aimants (9) des paliers radiaux électrodynamiques ; et des aimants (16) des paliers magnétiques permanents axiaux.

7. Accumulateur d'énergie rotatif selon la revendication 6, où le rotor (10) est dans un boîtier étanche (1), qui peut posséder une pompe à vide raccordée pour former un environnement sous vide dans lequel le rotor (10) peut tourner.

8. Accumulateur d'énergie rotatif selon la revendication 1, où le stator (12) est situé à égale distance entre des premier et second paliers magnétiques permanents axiaux.

9. Accumulateur d'énergie rotatif selon la revendication 1, où le corps de rotor contient en outre des aimants incorporés (11) dans une paroi du corps de rotor qui fait partie de l'unité moteur-générateur.

10. Accumulateur d'énergie rotatif selon la revendication 9, où les aimants incorporés (11) dans la paroi du rotor possèdent une séquence de polarisation qui forme un réseau de Halbach produisant un champ magnétique augmenté.

11. Accumulateur d'énergie rotatif selon la revendication 10, où le réseau de Halbach produit le champ magnétique augmenté dans une cavité interne (24) du rotor (10) où le stator (12) est situé.

12. Accumulateur d'énergie rotatif selon les revendications 8 et 9, où les aimants incorporés (11) à l'intérieur du rotor (10) tournent autour du stator (12) et sont également à égale distance entre les premier et second paliers magnétiques permanents axiaux.

13. Accumulateur d'énergie rotatif selon les revendications 2 et 6, où les conducteurs incorporés (7) pour les paliers électrodynamiques radiaux sont situés de sorte que les conducteurs incorporés (7) sont alignés avec les aimants de palier radiaux (9), afin que les conducteurs incorporés (7) à l'intérieur du rotor (10) tournent autour des aimants à palier radial (9) fixés par le boîtier (1).

14. Accumulateur d'énergie rotatif selon la revendication 6, où les conducteurs incorporés (6) pour les paliers magnétiques permanents axiaux sont situés de sorte que les conducteurs incorporés (6) sont incorporés dans le rotor (10) au niveau d'une extrémité ouverte du rotor (10), afin que la séquence d'agencement soit, un rotor (10) avec conducteur incorporé (6), un entrefer, l'agencement d'aimants permanents axiaux (16) qui est fixé en place par le boîtier (1).
